# FASCICULE DE BREVET EUROPEEN

(11) **EP 2 103 507 B1**
(45) Date de publication et mention de la délivrance du brevet: **19.06.2013**
(21) Numéro de dépôt: 09290187.5
(22) Date de dépôt: 13.03.2009
(51) Int. Cl.: B62D 35/02, B29C 45/14

(54) **Ecran sous moteur de véhicule automobile comprenant un support et un médaillon**
Schutzabschirmung unter dem Motor eines Kraftfahrzeugs, die eine Stütze und eine Scheibe umfasst
Screen beneath engine of automobile comprising a support and a medallion

(30) Priorité: 17.03.2008 FR 0801463
(43) Date de publication de la demande: 23.09.2009
(73) Titulaire: Centre d'étude et de recherche pour l'automobile (CERA), 51100 Reims (FR)
(72) Inventeur: Ribes, Stéphane, 51100 Reims (FR); Raybaud, Michael, 02820 Corbeny (FR)
(74) Mandataire: Sayettat, Julien Christian

(56) Documents cités:
- EP-A- 0 693 362
- WO-A-02/062550
- WO-A-2005/049380
- WO-A1-99/44862
- JP-A- 2006 327 429

## Description

L'invention concerne un écran sous moteur de véhicule automobile et un procédé de réalisation d'un tel écran.

Il est connu de réaliser un écran sous moteur de véhicule automobile à base de matière plastique moulée.

De telles pièces peuvent présenter des dimensions très importantes, ceci notamment en raison du fait qu'elles peuvent s'étendre largement hors de la zone du moteur, notamment vers l'arrière du véhicule.

Le WO 99/44862 décrit un écran sous moteur de véhicule automobile selon le préambule de la revendication 1.

Les moules des écrans doivent donc être montés sur des presses de très forte puissance, ce qui induit des coûts d'équipement considérables.

Pour y remédier, certains écrans sont conçus en plusieurs parties assemblées entre elles, ce qui est complexe et ne permet pas toujours de garantir une bonne étanchéité entre lesdites parties, recherchée notamment pour des raisons de protection acoustique, et ce qui peut être préjudiciable en matière d'aérodynamisme sous caisse (coefficient de traînée, turbulences).

En outre, les nouvelles motorisations requièrent des écrans résistant à des températures accrues, ce qui nécessite d'employer des matières plastiques de haute résistance et donc coûteuses.

L'invention selon la revendication 1 a pour but de pallier ces inconvénients.

A cet effet, et selon un premier aspect, l'invention propose un écran sous moteur de véhicule automobile à base de matière plastique moulée comprenant un support à base d'un premier matériau plastique moulé, ledit support comprenant au moins une ouverture, ladite ouverture étant obturée par un médaillon à base d'un deuxième matériau plastique moulé, de point de fusion supérieur à celui dudit premier matériau, au moins une partie de la périphérie dudit médaillon étant surmoulée par ledit support.

Ainsi, on peut réaliser des pièces de grande taille avec des moules montés sur des presses de moindre puissance.

En outre, l'étanchéité entre le médaillon et le support est garantie par le surmoulage mis en oeuvre, ce qui permet d'optimiser la protection acoustique et l'aérodynamisme sous caisse.

Par ailleurs, seul le deuxième matériau plastique peut être doté de propriétés renforcées de résistance à la chaleur, le premier matériau pouvant être choisi de qualité moindre, puisque étant moins exposé à la chaleur, et donc présentant un coût plus faible.

L'emploi du deuxième matériau, de résistance accrue à la chaleur, est circonscrit aux zones les plus exposées à la chaleur, ce qui permet de réaliser une baisse de coût de l'écran.

D'autre part, le premier matériau, ne nécessitant pas une résistance accrue à la chaleur, peut présenter une densité moindre que celle du deuxième matériau, ce qui permet d'alléger l'écran.

Selon un deuxième aspect, l'invention propose un procédé de réalisation d'un écran selon le premier aspect de l'invention comprenant les étapes de :
- mouler le médaillon,
- disposer le médaillon dans le moule du support,
- surmouler au moins une partie de la périphérie du médaillon par le support.

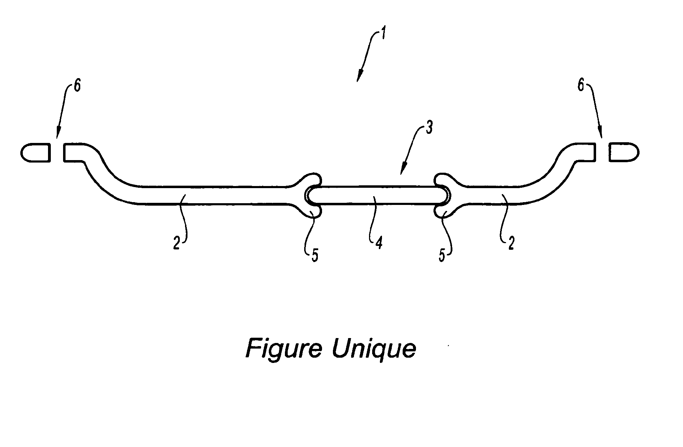

D'autres particularités et avantages de l'invention apparaîtront dans la description qui suit, faite en référence à la figure jointe qui est une représentation schématique en coupe d'un écran selon un mode de réalisation.

En référence à la figure, on décrit un écran sous moteur 1 de véhicule automobile comprenant un support 2 à base d'un premier matériau plastique moulé, ledit support comprenant au moins une ouverture 3, ladite ouverture étant obturée par un médaillon 4 à base d'un deuxième matériau plastique moulé, de point de fusion supérieur à celui dudit premier matériau, au moins une partie de la périphérie 5 dudit médaillon étant surmoulée par ledit support.

Selon une réalisation, la totalité de la périphérie 5 du médaillon est surmoulée par le support 2.

Comme représenté, le support 2 comprend des moyens de fixation 6 à la structure sous caisse du véhicule, ici sous forme d'orifices destinés à recevoir notamment des vis.

Selon une réalisation, le premier matériau est de moindre densité que le deuxième matériau, ce qui permet de procurer un allègement par rapport aux écrans mono matériau réalisés dans l'art antérieur.

Selon une réalisation, le support 2 est de moindre épaisseur générale que le médaillon 4, ce qui contribue aussi à l'allègement.

Selon une réalisation, le premier matériau est à base de polypropylène, ne présentant donc pas une résistance accrue à la chaleur.

Le premier matériau peut en particulier être un matériau recyclé.

Selon une réalisation, le deuxième matériau est à base de polyamide ou de polyester saturé (polyéthylène téréphtalate, polybutylène téréphtalate,...) connus pour leur résistance accrue à la chaleur.

Selon une réalisation, le deuxième matériau comprend un agent ignifugeant.

Selon une réalisation, au moins un des matériaux est chargé avec des fibres de renfort, notamment à base de verre ou végétales.

On décrit à présent un procédé de réalisation d'un écran 1 comprenant les étapes de :
- mouler le médaillon 4,
- disposer le médaillon 4 dans le moule du support 2,
- surmouler au moins une partie de la périphérie 5 du médaillon 4 par le support 2.

## Revendications

1. Ecran (1) sous moteur de véhicule automobile à base de matière plastique moulée, ledit écran (1) comprenant un support (2) à base d'un premier matériau plastique moulé, ledit support comprenant au moins une ouverture (3), ladite ouverture étant obturée par un médaillon (4), **caractérisé en ce que** ledit médaillon (4) est à base d'un deuxième matériau plastique moulé, de point de fusion supérieur à celui dudit premier matériau, au moins une partie de la périphérie (5) dudit médaillon étant surmoulée par ledit support.

2. Ecran selon la revendication 1, **caractérisé en ce que** la totalité de la périphérie (5) du médaillon (4) est surmoulée par le support.

3. Ecran selon l'une quelconque des revendications 1 ou 2, **caractérisé en ce que** le support (2) comprend des moyens de fixation (6) à la structure sous caisse du véhicule.

4. Ecran selon l'une quelconque des revendications 1 à 3, **caractérisé en ce que** le premier matériau est de moindre densité que le deuxième matériau.

5. Ecran selon l'une quelconque des revendications 1 à 4, **caractérisé en ce que** le support (2) est de moindre épaisseur générale que le médaillon (4).

6. Ecran selon l'une quelconque des revendications 1 à 5, **caractérisé en ce que** le premier matériau est à base de polypropylène.

7. Ecran selon l'une quelconque des revendications 1 à 6, **caractérisé en ce que** le deuxième matériau est à base de polyamide ou de polyester saturé.

8. Ecran selon l'une quelconque des revendications 1 à 7, **caractérisé en ce que** le deuxième matériau comprend un agent ignifugeant.

9. Ecran selon l'une quelconque des revendications 1 à 8, **caractérisé en ce qu'**au moins un des matériaux est chargé avec des fibres de renfort.

10. Procédé de réalisation d'un écran selon l'une quelconque des revendications 1 à 9, **caractérisé en ce qu'**il comprend les étapes de :
• mouler le médaillon (4),
• disposer le médaillon (4) dans le moule du support (2),
• surmouler au moins une partie de la périphérie (5) du médaillon (4) par le support (2).

## Patentansprüche

1. Schutzabdeckung (1) unter einem Kraftfahrzeugmotor auf Basis eines abgeformten Kunststoffes, wobei die besagte Schutzabdeckung (1) einen Träger (2) auf Basis eines ersten abgeformten Kunststoffes umfasst, und der besagte Träger zumindest eine Öffnung (3) aufweist, und die besagte Öffnung durch ein Medaillon (4) verschlossen wird, **dadurch gekennzeichnet, dass** das besagte Medaillon (4) auf einem zweiten abgeformten Kunststoff basiert, dessen Schmelzpunkt über jenem des besagten ersten Werkstoffes liegt, und zumindest ein Teil des Randes (5) des besagten Medaillons nach dem besagten Träger abgeformt ist.

2. Schutzabdeckung nach Anspruch 1, **dadurch gekennzeichnet, dass** der gesamte Rand (5) des Medaillons (4) nach dem besagten Träger abgeformt ist.

3. Schutzabdeckung nach irgendeinem der Ansprüche 1 oder 2, **dadurch gekennzeichnet, dass** der Träger (2) Vorrichtungen (6) zur Befestigung an der Struktur der Unterseite der Fahrzeugkarosserie umfasst.

4. Schutzabdeckung nach irgendeinem der Ansprüche 1 bis 3, **dadurch gekennzeichnet, dass** der erste Werkstoff eine geringere Dichte aufweist, als der zweite Werkstoff.

5. Schutzabdeckung nach irgendeinem der Ansprüche 1 bis 4, **dadurch gekennzeichnet, dass** der Träger (2) eine geringere allgemeine Dicke aufweist, als das Medaillon (4).

6. Schutzabdeckung nach irgendeinem der Ansprüche 1 bis 5, **dadurch gekennzeichnet, dass** der erste Werkstoff auf Polypropylen basiert.

7. Schutzabdeckung nach irgendeinem der Ansprüche 1 bis 6, **dadurch gekennzeichnet, dass** der zweite Werkstoff auf Polyamid oder auf gesättigtem Polyester basiert.

8. Schutzabdeckung nach irgendeinem der Ansprüche 1 bis 7, **dadurch gekennzeichnet, dass** der zweite Werkstoff ein feuerfestes Mittel umfasst.

9. Schutzabdeckung nach irgendeinem der Ansprüche 1 bis 8, **dadurch gekennzeichnet, dass** zumindest einer der Werkstoffe mit Versteifungsfasern versetzt ist.

10. Verfahren zur Herstellung einer Schutzabdeckung nach irgendeinem der Ansprüche 1 bis 9, **dadurch gekennzeichnet, dass** es die folgenden Schritte umfasst:
- Formgießen eines Medaillons (4).
- Anbringen des Medaillons (4) in der Form des Trägers (2).
- Abformen zumindest eines Teils des Randes (5) des Medaillons (4) nach dem Träger (2).

## Claims

1. Screen (1) under the engine of a motor vehicle with a moulded plastic material base, said screen (1) comprising a support (2) with a first moulded plastic material base, said support comprising at least one opening (3), with said opening being closed by a medallion (4), **characterised in that** said medallion (4) has a second moulded plastic material base, with a fusion point higher than that of said first material, with at least one portion of the periphery (5) of said medallion being overmoulded by said support.

2. Screen according to claim 1, **characterised in that** the entire periphery (5) of the medallion (4) is overmoulded by the support.

3. Screen according to any of claims 1 or 2, **characterised in that** the support (2) comprises means for fastening (6) the structure under the body of the vehicle.

4. Screen according to any of claims 1 to 3, **characterised in that** the first material is of less density than the second material.

5. Screen according to any of claims 1 to 4, **characterised in that** the support (2) is of lesser general thickness than the medallion (4).

6. Screen according to any of claims 1 to 5, **characterised in that** the first material has a polypropylene base.

7. Screen according to any of claims 1 to 6, **characterised in that** the second material has a polyamide or saturated polyester base.

8. Screen according to any of claims 1 to 7, **characterised in that** the second material comprises a flame retardant agent.

9. Screen according to any of claims 1 to 8, **characterised in that** at least one of the materials is loaded with reinforcing fibres.

10. Method for producing a screen according to any of claims 1 to 9, **characterised in that** it comprises the steps of:
- moulding the medallion (4),
- arranging the medallion (4) in the mould of the support (2),
- overmoulding at least one portion of the periphery (5) of the medallion (4) by the support (2).
